Europäisches Patentamt

European Patent Office

Office européen des brevets

(11) Publication number: **0 190 618**
**B1**

## (12) EUROPEAN PATENT SPECIFICATION

(45) Date of publication of patent specification: **05.09.90**

(51) Int. Cl.⁵: **H 04 N 9/64,** H 04 N 9/80

(21) Application number: **86100900.9**

(22) Date of filing: **23.01.86**

(54) Digital chrominance signal processing system.

(30) Priority: **31.01.85 JP 17130/85**

(43) Date of publication of application:
**13.08.86 Bulletin 86/33**

(45) Publication of the grant of the patent:
**05.09.90 Bulletin 90/36**

(84) Designated Contracting States:
**AT DE FR GB NL**

(56) References cited:
**US-A-4 419 687**
**US-A-4 460 925**

(73) Proprietor: **SONY CORPORATION**
**7-35 Kitashinagawa 6-Chome Shinagawa-ku**
**Tokyo 141 (JP)**

(72) Inventor: **Kobayashi, Yuji**
**Sony Corp. 7-35, Kitashinagawa 6-chome**
**Shinagawa-ku Tokyo (JP)**
Inventor: **Takamori, Tsutomu**
**Sony Corp. 7-35, Kitashinagawa 6-chome**
**Shinagawa-ku Tokyo (JP)**

(74) Representative: **Schmidt-Evers, Jürgen, Dipl.-**
**Ing. et al**
**Patentanwälte Dipl.-Ing. H. Mitscherlich Dipl.-**
**Ing. K. Gunschmann Dipl.-Ing. Dr.rer.nat. W.**
**Körber Dipl.-Ing. J. Schmidt-Evers Dipl.-Ing. W.**
**Melzer Steinsdorfstrasse 10**
**D-8000 München 22 (DE)**

Courier Press, Leamington Spa, England.

## Description

### Field of the invention

The present invention relates to a phase control circuit for an input digital composite chrominance signal as is defined in the preambles of claims 1 and 3.

### Description of the prior art

It is frequently required to control a pahse of a video signal in the video recording and reproducing field, such as in a drop-out compensation circuit and in a hue control circuit.

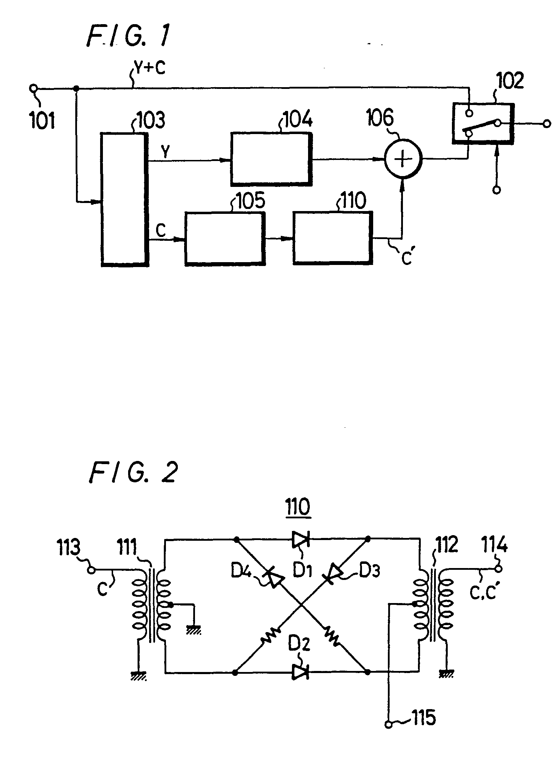

Fig. 1 shows one embodiment of a drop-out compensation circuit which is used in a reproducing circuit of a VTR (video tape recorder).

Referring to Fig. 1, a reproduced video signal which is supplied to an input terminal 101 is supplied to a switch 102 and to an Y/C separator 103 from which a luminance signal Y and a chrominance signal C are separately derived. They are supplied to 1H (H is the horizontal period) delay lines 104 and 105, respectively. The chrominance signal is supplied to a chroma inverter 110 in which the phase of the subcarrier thereof is inverted and is then combined with the luminance signal Y by an adder 106.

The combined video signal is supplied to the switch 102. When a drop-out occurs, the switch 102 is controlled such that the movable contact thereof is connected in the illustrated state, or connected to the output side of the adder 106 to thereby use a compensation video signal having no drop-out. The reason why the phase-inverted chrominance signal is used when the drop-out occurs is that the phase of the chrominance signal is inverted at every 1H.

Fig. 2 shows one example of the chroma inverter 110 that is used in the aforesaid drop-out compensation circuit. As disclosed in U.S. Patent No. US—A—3,564,123, the chroma inverter 110 comprises input and output transformers 111 and 112, in which the chrominance signal C is supplied to a terminal 113 of the input transformer 111 and a chrominance signal C' the phase of which is inverted as required is developed at a terminal 114 of the output transformer 112.

Between the input and output transformers 111 and 112, there are provided 4 switching diodes $D_1$ to $D_4$ as shown in Fig. 2. When a command signal applied to a terminal 115 is at "L" (low) level, the diodes $D_1$ and $D_2$ are turned on, while the diodes $D_3$ and $D_4$ are turned off. When on the other hand the command signal is at "H" (high) level, the diodes $D_1$ and $D_2$ are turned off, while the diodes $D_3$ and $D_4$ are turned on. Consequently, the chrominance signal applied to the input side of the output transformer 112 is made to have an opposite polarity to the preceding polarity so that when the command signal is at "H" level, the phase-inverted chrominance signal C' is developed at the output terminal 114.

With the conventional chroma inverter being thus constructed, it is only possible to provide the chrominance signal having the phase 0 or π by controlling the polarity of the command signal. Accordingly, although the chroma inverter of this type can be applied to the chrominance signal of NTSC format, it cannot be used for the chrominance signal of PAL format. Because, the phase shift of π/2 is required in the chroma inverter of PAL chrominance signal. Therefore, the conventional chroma inverter cannot be used widely and also such construction of the conventional chroma inverter is not suitable for the digital processing.

Furthermore an apparatus for deriving a PAL color television signal corresponding to any desired field in an 8-field PAL sequence from one stored field or picture of a PAL signal is known from US—A—4 460 925. However, the said known apparatus does not work satisfactorily in processing an input digital composite chrominance signal which is sampled with a sampling frequency of $2mf_{sc}$ wherein m is an integer and $f_{sc}$ is a color subcarrier frequency of the composite chrominance signal.

### Objects and summary of the invention

Accordingly, it is an object of this invention to provide a phase control circuit for an input digital composite chrominance signal which can remove the above mentioned defects.

It is another object of this invention to provide a phase control circuit for an input digital composite chrominance signal which is suitable for the digital processing to afford a chrominacne signal having a desired phase.

The aforementioned objects are solved by phase control circuits as are defined in claims 1 and 3.

Suitable embodiments of the phase control circuit according to the present invention are defined in the claims 2 and 4.

The objects, features and advantages of the present invention will become apparent from the following detailed description of the preferred embodiments taken in conjunction with the accompanying drawings, throughout which like reference numerals designate like elements and parts.

### Brief description of the drawings

Fig. 1 is a block diagram showing a prior art drop-out compensation circuit which is used in a reproducing circuit of a VTR (video tape recorder);

Fig. 2 is a diagram showing one example of a chroma inverter used in the drop-out compensation circuit of Fig. 1;

Fig. 3 is a circuit diagram used to explain the phase control operation done by the analog processing;

Fig. 4 is a diagram useful for explaining the fundamental idea of the chrominance phase control operation;

Fig. 5 is a circuit diagram which can realize such fundamental idea of the chrominance phase control operation explained in Fig. 4;

Fig. 6 is a circuit diagram showing an embodiment of a digital decoder and a digital encoder which constitute a digital chrominance phase control circuit;

Fig. 7 is a circuit diagram showing a further embodiment of the digital decoder and the digital encoder and in which the second and third switching means used in the circuit of Fig. 6 is replaced by one switching means;

Fig. 8 is a circuit diagram showing an embodiment of the digital encoder according to the present invention;

Fig. 9 is a circuit diagram showing a further embodiment of the present invention which can carry out a time-division frequency multiplexing operation; and

Fig. 10 is a diagram showing a case in which the phase control circuit of Fig. 9 is applied to the drop-out compensation circuit as the chroma inverter.

Description of the preferred embodiments

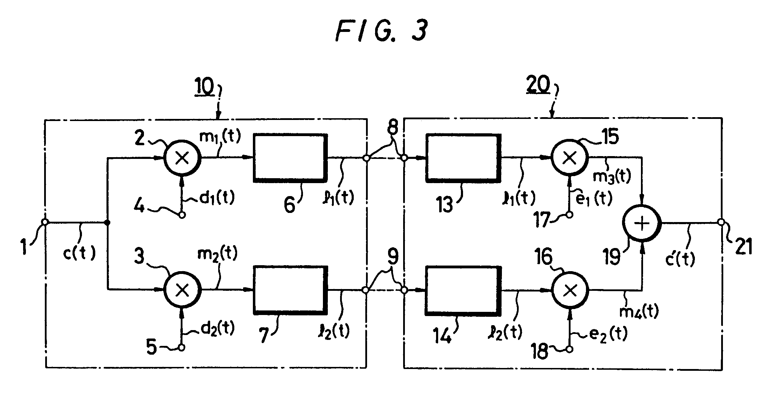

Now, the present invention will hereinafter be described with reference to the drawings. In the present invention, a predetermined phase difference $\theta$ can be provided by the digital processing. In this case, for convenience sake of explanation, the phase control operation by an analog processing will be described in detail with reference to Fig. 3.

If a composite video signal is taken as $S(t)$, $S(t)$ is expressed as

$$S(t) = y(t) + c(t)$$
$$= y(t) + c_1(t)\cos(\omega_{sc}t + \theta_0) + c_2(t)\sin(\omega_{sc}t + \theta_0) \tag{1}$$

where $y(t)$ is the luminance signal, $c(t)$ is the chrominance signal, $c_1(t)$ and $c_2(t)$ are the color signals $c_1$ and $c_2$, $\omega_{sc}$ is the angular frequency of the subcarrier ($=2\pi$ fsc and fsc are the subcarrier frequencies) and $\theta_0$ is the initial phase of the subcarrier.

When the color signals $c_1(t)$ and $c_2(t)$ are of the NTSC format, they are expressed as

$$\left.\begin{array}{l} c_1(t) = \text{U axis component} = B - Y/2.03 \\ c_2(t) = \text{V axis component} = R - Y/1.14 \end{array}\right\} \tag{2}$$

where $B-Y$ and $R-Y$ represent the blue and red color difference signals, respectively.

If they are of PAL format, the condition of $c_2(t) = \pm V$ axis component is established.

The chrominance signal $c(t)$ resulting from the Y/C separation is supplied to a decoder 10 shown in Fig. 3. Specifically, the chrominance signal $c(t)$ applied to a terminal 1 is supplied to first and second multipliers 2 and 3. These multipliers 2 and 3 are also supplied with first and second decode carriers $d_1(t)$ and $d_2(t)$, which are expressed by the followings Eqs. (3) and (4), from terminals 4 and 5.

$$d_1(t) = 2\cos(\omega_{sc}t + \theta_1) \tag{3}$$

$$d_2(t) = 2\sin(\omega_{sc}t + \theta_1) \tag{4}$$

where $\theta_1$ represents the initial phase of the decode carrier.

Accordingly, first and second mutiplied outputs $m_1(t)$ and $m_2(t)$ are expressed as

$$\begin{aligned} m_1(t) &= 2c(t)\cos(\omega_{sc}t + \theta_1) \\ &= 2c_1(t)\cos(\omega_{sc}t + \theta_0)\cos(\omega_{sc}t + \theta_1) \\ &\quad + 2c_2(t)\sin(\omega_{sc}t + \theta_0)\cos(\omega_{sc}t + \theta_1) \\ &= c_1(t)\{\cos(2\omega_{sc}t + \theta_0 + \theta_1) + \cos(\theta_0 - \theta_1)\} \\ &\quad + c_2(t)\{\sin(2\omega_{sc}t + \theta_0 + \theta_1) + \sin(\theta_0 - \theta_1)\} \\ &= c_1(t)\{\cos 2\omega_{sc}t \cdot \cos(\theta_0 + \theta_1) - \sin 2\omega_{sc}t \cdot \sin(\theta_0 + \theta_1) + \cos(\theta_0 - \theta_1)\} \\ &\quad + c_2(t)\{\sin 2\omega_{sc}t \cdot \cos(\theta_0 + \theta_1) + \cos 2\omega_{sc}t \cdot \sin(\theta_0 + \theta_1) + \sin(\theta_0 - \theta_1)\} \end{aligned} \tag{5}$$

$$\begin{aligned} m_2(t) &= 2C(t)\sin(\omega_{sc}t + \theta_1) \\ &= c_1(t)\{\cos 2\omega_{sc}t \cdot \sin(\theta_0 + \theta_1) + \sin 2\omega_{sc}t \cdot \cos(\theta_0 + \theta_1) - \sin(\theta_0 - \theta_1)\} \\ &\quad + c_2(t)\{\sin 2\omega_{sc}t \cdot \sin(\theta_0 + \theta_1) - \cos 2\omega_{sc}t \cdot \cos(\theta_0 + \theta_1) + \cos(\theta_0 - \theta_1)\} \end{aligned} \tag{6}$$

These calculated outputs $m_1(t)$ and $m_2(t)$ are respectively supplied to low pass filters 6 and 7 in which the item of $2\omega_{sc}t$ (high frequency band component) is removed from each of the calculated outputs. Accordingly, decoded outputs $l_1$ and $l_2$ developed at terminals 8 and 9 become as

$$l_1(t) = c_1(t)\cos(\theta_0 - \theta_1) + c_2(t)\sin(\theta_0 - \theta_1) \tag{7}$$
$$l_2(t) = -c_1(t)\sin(\theta_0 - \theta_1) + c_2(t)\cos(\theta_0 - \theta_1) \tag{8}$$

# EP 0 190 618 B1

When the decode carriers $d_1(t)$ and $d_2(t)$ having the initial phase $\theta_1$ given by the Eqs. (3) and (4) are multiplied with the chrominance signal $c(t)$ and are then passed through the low pass filters 6 and 7 as described above, it will be apparent from the Eqs. (7) and (8) that the decoded outputs $l_1(t)$ and $l_2(t)$ are produced under the state that the chrominance signal $c(t)$ is decoded on the axes which result from rotating the axes of the color signals $c_1$ and $c_2$ in the clockwise direction by $\theta_1$.

The decoded outputs $l_1(t)$ and $l_2(t)$ expressed by the Eqs. (7) and (8) are supplied to an encoder 20 in which they are phase-converted to a chrominance signal $c'(t)$ having a desired phase difference relative to the chrominance signal $c(t)$ applied to the decoder 10.

In other words, to the terminals 8 and 9, there are supplied the decoded outputs $l_1(t)$ and $l_2(t)$ which are expressed by the Eqs. (7) and (8). These outputs are supplied to and limited in band by low pass filters 13 and 14, respectively and are then fed to third and fourth multipliers 15 and 16. From terminals 17 and 18, these multipliers 15 and 16 are supplied with first and second encode carriers $e_1(t)$ and $e_2(t)$ that are expressed by the following Eqs. (9) and (10)

$$e_1(t)=\cos(\omega_{sc}t+\theta_2) \tag{9}$$
$$e_2(t)=\sin(\omega_{sc}t+\theta_2) \tag{10}$$

where $\theta_2$ is the initial phase of the encode carriers.

Accordingly, the third and fourth multiplied outputs $m_3(t)$ and $m_4(t)$ are expressed as

$$
\begin{aligned}
m_3(t)=&c_1(t)\cos(\omega_{sc}t+\theta_2)\cos(\theta_0-\theta_1) \\
&+c_2(t)\cos(\omega_{sc}t+\theta_2)\sin(\theta_0-\theta_1)
\end{aligned} \tag{11}
$$
$$
\begin{aligned}
m_4(t)=&-c_1(t)\sin(\omega_{sc}t+\theta_2)\sin(\theta_0-\theta_1) \\
&+c_2(t)\sin(\omega_{sc}t+\theta_2)\cos(\theta_0-\theta_1)
\end{aligned} \tag{12}
$$

Thus, if these multiplied outputs $m_3(t)$ and $m_4(t)$ are combined together by a composer 19, an encoded output $c'(t)$ expressed by the following Eq. (13) is developed at an output terminal 21.

$$
\begin{aligned}
c'(t)=&m_3(t)+m_4(t) \\
=&c_1(t)\cos(\omega_{sc}t+\theta_2)\cos(\theta_0-\theta_1) \\
&+c_2(t)\cos(\omega_{sc}t+\theta_2)\sin(\theta_0-\theta_1) \\
&-c_1(t)\sin(\omega_{sc}t+\theta_2)\sin(\theta_0-\theta_1) \\
&+c_2(t)\sin(\omega_{sc}t+\theta_2)\cos(\theta_0-\theta_1) \\
=&c_1(t)\cos(\omega_{sc}t+\theta_2+\theta_0-\theta_1) \\
&+c_2(t)\sin(\omega_{sc}t+\theta_2+\theta_0-\theta_1).
\end{aligned} \tag{13}
$$

As will be clear from the Eq. (13), the phase of the encoded output $c'(t)$ is displaced by $(\theta_2-\theta_1)$ from the phase of the chrominance signal $c(t)$ applied to the decoder 10. As a result, if the respective phases $\theta_1$ and $\theta_2$ of the decode carriers $d_1(t)$ and $d_2(t)$ and the encode carriers $e_1(t)$ and $e_2(t)$ are selected properly, it is possible to desirably vary the phases of the output chrominance signal $c'(t)$ as the encode output.

This invention is to follow the fundamental idea of such chrominance phase control operation as described above and is to apply such fundamental idea to the digital signal processing.

In general, if the initial phases $\theta_0$ and $\theta_1$ of the input chroma signal and the decode carrier are zero, outputs $DS_1(n)$ and $DS_2(n)$, which result from decoding a digital chrominance signal $DC(n)$ by a digital decoder forming a chroma phase control circuit, are expressed as

$$DS_1(n)=DC(n)\cos\omega_{sc}nTs$$
$$DS_2(n)=DC(n)\sin\omega_{sc}nTs.$$

where Ts is the sampling period and the condition of Ts=1/fs (fs is the sampling frequency) is satisfied.

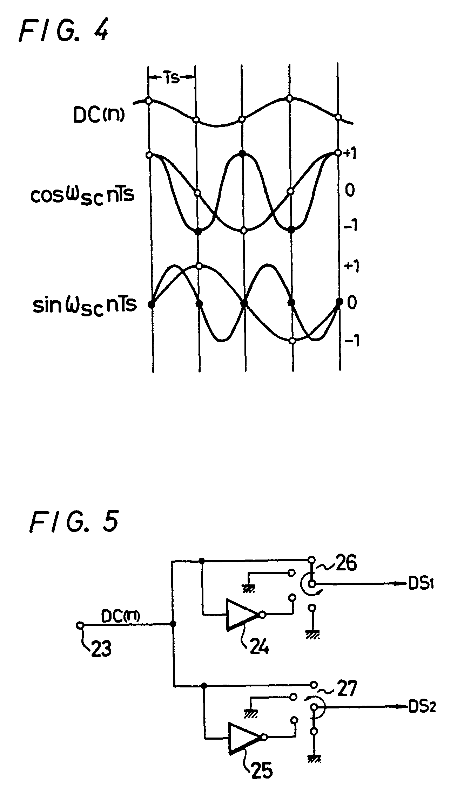

Accordingly, as shown in Fig. 4, $DS_1(n)$ can be expressed by the values which result from sequentially multiplying 1, 0, −1, 0 with $DC(n)$, while $DS_2(n)$ can be expressed by the values which result from sequentially multiplying 0, 1, 0, −1 with $DC(n)$. If this is expressed by a circuit diagram, it becomes as shown in Fig. 5.

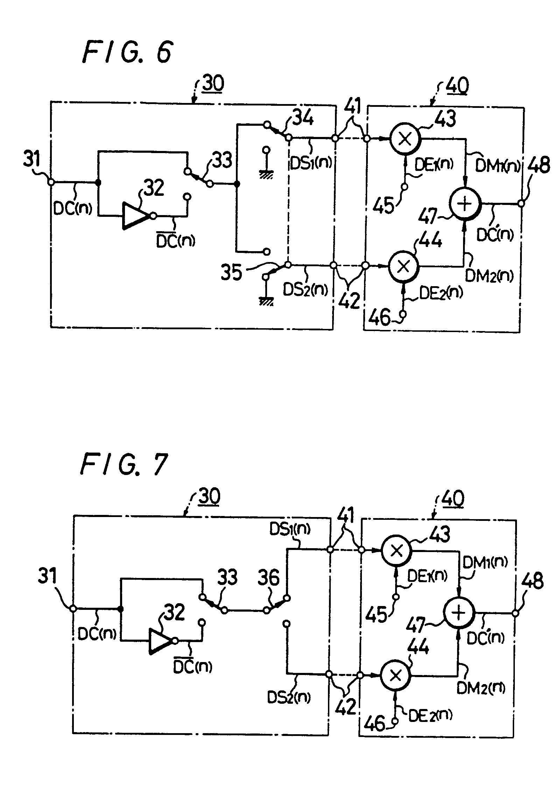

Referring to Fig. 5, the digital chrominance signal $DC(n)$ applied to an input terminal 23 and signals $\overline{DC}(n)$ which are obtained by phase-inverting the digital chrominance signal $DC(n)$ in code inverters 24 and 25 are supplied to switches 26 and 27, respectively. The switches 26 and 27 are each formed of a quadrapole rotary switch and the switching phases thereof are displaced by 90° from each other. The second pole and the fourth pole of the switches 26 and 27 are grounded, the first poles of the switches 26 and 27 are supplied with the signal $DC(n)$ and the third poles of the switches 26 and 27 are supplied with the signal $\overline{DC}(n)$, respectively. The circuit of Fig. 5 employs two code converters and two quadrapole rotary switches. Fig. 6 shows one example of a circuit which simplifies the circuit of Fig. 5. Particularly, Fig. 6 illustrates one embodiment of a digital decoder 30 and a digital encoder 40 which form a digital chroma phase control circuit.

Referring to Fig. 6, the digital decoder 30 includes a code converter 32 to convert the chrominance

4

signal DC(n) supplied thereto from a terminal 31. A code-converted chrominance signal $\overline{DC}(n)$ therefrom and the chrominance signal DC(n), which is not yet code-converted, are switched by a first switching means 33. The switching rate thereof is different from the sampling rate of the chrominance signal DC(n). The output from the first switching means 33 is supplied simultaneously to second and third switching means 34 and 35 which are operated on the basis of the sampling rate. Accordingly, the signals $DS_1(n)$ and $DS_2(n)$ are sequentially delivered from the first switching means 33 and the output from the first switching means 33 is distributed into the outputs $DS_1(n)$ and $DS_2(n)$ by the second and third switching means 34 and 35.

Subsequently, the signals $DS_1(n)$ and $DS_2(n)$ will be described more fully. Although the decode outputs are given as by the Eqs. (5) and (6) previously, the decode outputs by the Eqs. (5) and (6) are rewritten as

$$m_1(t)=c_1(t)(1+\cos 2\omega_{sc}t)+c_2(t) \sin 2\omega_{sc}t \qquad (14)$$
$$m_2(t)=c_1(t) \sin 2\omega_{sc}t+c_2(t)(1-\cos 2\omega_{sc}t) \qquad (15)$$

Since t=nTs is satisfied, the digital decode outputs $DS_1(n)$ and $DS_2(n)$ are expressed as follows.

$$DS_1(n)=c_1(n)(1+\cos 2\omega_{sc} \cdot nTs)+c_2(n) \sin 2\omega_{sc} \cdot nTs$$
$$DS_2(n)=c_1(n) \sin 2\omega_{sc} \cdot nTs+c_2(n) (1+\cos 2\omega_{sc} \cdot nTs).$$

Further, if the sampling frequency fs is four times the frequency fsc, the condition of

$$Ts=\frac{1}{4fsc}=\frac{2\pi}{4\omega_{sc}}$$

is established and thus

$$DS_1(n)=c_1(n)(1+\cos n\pi)+c_2(n) \sin n\pi$$
$$DS_2(n)=c_1(n) \sin n\pi+c_1(n) (1-\cos n\pi).$$

Where $\sin n\pi$ always becomes zero, while $\cos n\pi$ becomes +1 or −1 depending on the sampling position, so that the following Eqs. (16) and (17) are established

$$DS_1(n)=c_1(n)\{1+(-1)^n\} \qquad (16)$$
$$DS_2(n)=c_2(n)\{1-(-1)^n\}. \qquad (17)$$

Thus, the switching outputs $DS_1(n)$ and $DS_2(n)$ expressed by the Eqs. (16) and (17) are used as the decode outputs.

The first and second switching outputs $DS_1(n)$ and $DS_2(n)$ are supplied to the digital encoder 40. More specifically, the decode outputs $DS_1(n)$ and $DS_2(n)$ are supplied to terminals 41 and 42 and these outputs are supplied to and multiplied with encode carriers (digital signals) $DE_1(n)$ and $DE_2(n)$ by fifth and sixth multipliers 43 and 44. As the encode carriers $DE_1(n)$ and $DE_2(n)$ to be supplied to terminals 45 and 46, there can be used such ones as expressed by the following Eqs. (18) and (19)

$$DE_1(n)=\cos(\omega_{sc} \cdot nTs+\theta_2) \qquad (18)$$
$$DE_2(n)=\sin(\omega_{sc} \cdot nTs+\theta_2). \qquad (19)$$

The resultant first and second multiplied outputs $DM_1(n)$ and $DM_2(n)$ are combined with each other by a synthesizer or composer 47 and hence the multiplied outputs $DM_1(n)$ and $DM_2(n)$ and an encode output DC', which is finally produced at an output terminal 48, are given as by the following Eqs. (20), (21) and (22), respectively.

$$DM_1(n)=c_1(n)\cos(\omega_{sc} \cdot nTs+\theta_2)\cos \theta_0$$
$$+c_2(n)\cos(\omega_{sc} \cdot nTs+\theta_2) \sin \theta_0 \qquad (20)$$
$$DM_2(n)=-c_1(n)\sin(\omega_{sc} \cdot nTs+\theta_2) \sin \theta_0$$
$$+c_2(n)\sin(\omega_{sc} \cdot nTs+\theta_2) \cos \theta_0 \qquad (21)$$
$$\therefore DC'(n)=DM_1(n)+DM_2(n)$$
$$=c_1(n) \cos (\omega_{sc} \cdot nTs+\theta_2+\theta_0)$$
$$+c_2(n) \sin (\omega_{sc} \cdot nTs+\theta_2+\theta_0). \qquad (22)$$

From the Eq. (22), it will be apparent that the phase of the digital output chrominance signal DC'(n) as the encode output becomes different from the initial phase $\theta_0$ of the input chrominance signal by $\theta$. Accordingly, by controlling the phase $\theta_2$ of the encode carriers $DE_1(n)$ and $DE_2(n)$, it is possible to desirably control the phase of the output chrominance signal DC'(n).

As shown by the Eqs. (16) and (17), since in the first and second switching outputs $DS_1(n)$ and $DS_2(n)$, depending on the sampling positions, $\cos 2\omega_{sc}t$ becomes either +1 or −1 and $\sin 2\omega_{sc}t$ becomes zero, in the digital decoder 30, the chrominance signal DC(n) and the chrominance signal $\overline{DC}$(n) provided by code-converting the signal DC(n) by the code converter 32 are supplied to the first switching means 33 and the first switching means 33 are controlled so as to alternately deliver therefrom chrominance signals DC(n) and $\overline{DC}$(n). The output switched by the first switching means 33 is supplied to the second and third switching means 34 and 35 which are switched in the interlocking fashion. The chrominance signal $\overline{DC}$(n) must be inverted in the form of 2's complement so that an adder is used as the code converter 32.

Since the phases of the first and second switching outputs $DS_1(n)$ and $DS_2(n)$ are different from each other by 90°, when one output is produced at a certain sampling position, the other output becomes zero. This output state is alternately repeated so that one terminal of the second and third switching means 34 and 35 are grounded.

The t($=nTs$) of the decoder 30 is selected to be 4fsc or 2fsc. In this case, the switching frequencies of the switching means 34 and 35 are selected to be 4fsc (or 2fsc), while the switching frequency of the first switching means 33 is selected to be 2fsc (or fsc).

When the switching frequency is selected to be 4fsc, relationships concerning the first and second switching outputs $DS_1(n)$ and $DS_2(n)$ and the time series n (n=0, 1, 2, . . .) become as shown on Table 1 below.

TABLE 1

| Time series | First switching output $DS_1(n)$ | Second switching output $DS_2(n)$ |
|---|---|---|
| 0 | $2c_1(0)\cos\theta_0+2c_2(0)\sin\theta_0$ | 0 |
| 1 | 0 | $-2c_1(1)\sin\theta_0+2c_2(1)\cos\theta_0$ |
| 2 | $2c_1(2)\cos\theta_0+2c_2(2)\sin\theta_0$ | 0 |
| 3 | 0 | $-2c_1(3)\sin\theta_0+2c_2(3)\cos\theta_0$ |
| 4 | $2c_1(4)\cos\theta_0+2c_2(4)\sin\theta_0$ | 0 |
| ⋮ | 0 ⋮ | ⋮ |

Since the first and second switching outputs $DS_1(n)$ and $DS_2(n)$ alternately become zero as mentioned above, the second and third switching means 34 and 35 shown in Fig. 6 can be substituted with one switching means. Accordingly in this case, it is sufficient that a switching means 36 shown in Fig. 7 is used.

When the output chrominance signal DC'(n) having the same or opposite phase to the phase of the subcarrier of the input chrominance signal DC(n) is obtained, since the respective outputs from the decoder 30 have to be code-converted at every 1/2fsc or 1/fsc, it is sufficient that the digital encoder 40 carries out the exactly opposite signal processing to that of the digital decoder 30.

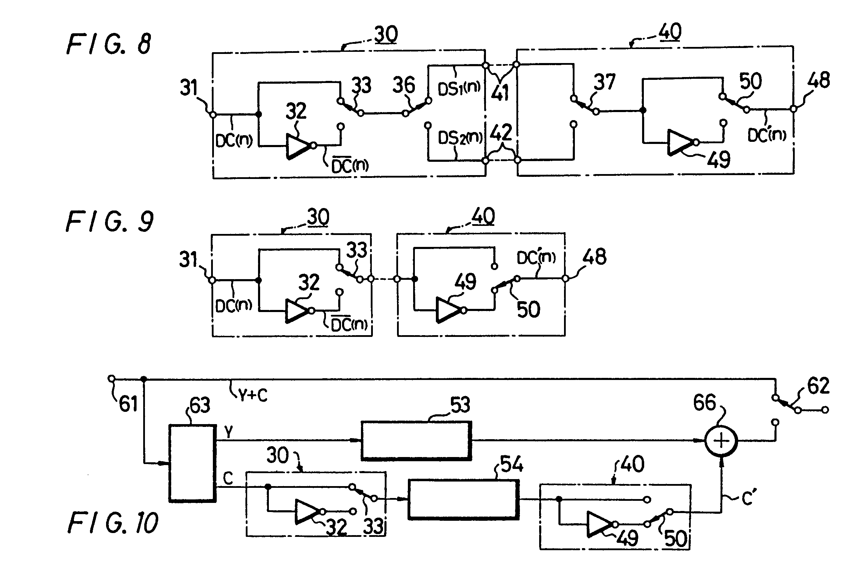

Accordingly, as shown in Fig. 8, the switching outputs $DS_1(n)$ and $DS_2(n)$ are supplied to a switching means 37 which is switched at the frequency 4fsc or 2fsc and the output therefrom and an output, which is provided by code-converting the output by a code converter 49, are supplied to a switching means 50 the switching frequency of which is 2fsc or fsc. If the switching phase of the switching means 50 is selected to be the same as the switching phase of the switching means 33 in the decoder 30 side, the chrominance signal DC'(n) having the same phase as that of the input chrominance signal can be obtained. If on the other hand it is selected to be the opposite phase, the phase-inverted chrominance signal $\overline{DC}$'(n) can be obtained.

According to the circuit arrangement of Fig. 8, the first and second switching outputs $DS_1(n)$ and $DS_2(n)$ can be produced alternately so that these switching outputs $DS_1(n)$ and $DS_2(n)$ can be frequency-multiplexed in a time-division manner.

Fig. 9 shows one example of a circuit which can effect the frequency-multiplexing operation in a time-division manner. In Fig. 9, like parts corresponding to those of Fig. 8 are marked with the same references and will not be described, in which the switching means 36 and 37 are not required and so they are removed.

Further, Fig. 10 shows an example of a case in which the phase control circuit shown in Fig. 9 is applied to the drop-out compensation circuit as a chroma inverter. In Fig. 10, reference numerals 53 and 54 designate processors formed of such as a 1H memory and so on and used to compensate for the drop-out, respectively. In this case, at the preceding stage of the drop-out processor 54 provided in the chroma signal system, there is connected the digital decoder 30 shown in Fig. 9, while at the succeeding stage of the drop-out processor 54, there is connected the digital encoder 40 also shown in Fig. 9, whereby when the phase is to be inverted, the switching phases of the switching means 33 and 50 are controlled to become opposite to each other.

When the digital chrominance signal $DC(n)$ includes a velocity error, the initial phase $\theta_0$ of the digital chroma signal $DC(n)$ becomes the value $\theta_0(n)$ which is changed with time. In such case, when the digital chrominance signal $DC(n)$ is passed through the above mentioned phase control circuit, it is encoded under the state that it contains the velocity error. Accordingly, the encode output $DC'(n)$ corresponding to the Eq. (22) is expressed as

$$DC'(n) = c_1(n) \cos (\omega_{sc} \cdot nTs + \theta_2(n))$$
$$+ c_2(n) \sin (\omega_{sc} \cdot nTs + \theta_2(n)) \tag{23}$$

## Claims

1. A phase control circuit for an input digital composite chrominance signal $(DC(n))$ which is sampled with a sampling frequency of $2mf_{sc}$ wherein m is an integer and $f_{sc}$ is a color subcarrier frequency of the composite chrominance signal, characterized in decoder means (30) for converting said input digital composite chrominance signal $(DC(n))$ into digital chrominance components $(DS_1(n), DS_2(n))$, said decoder means (30) including first inverting means (32) for inverting said input digital composite chrominance signal $(DC(n))$, first switch means (33) for switching between said input digital composite chrominance signal $(DC(n))$ and an output $(\overline{DC(n)})$ of said inverting means (32) in response to a first switching signal having a frequency of $mf_{sc}$, second switch means (36) for distributing an output of said first switch means (33) into said digital chrominance components $(DS_1(n), DS_2(n))$, said second switch means (36) being switched in response to a second switch signal having a frequency of $2mf_{sc}$, means (41, 42) for transmitting the digital chrominance components $(DS_1(n), DS_2(n))$ from said decoder means (30) to an encoder means (40); said encoder means (40) converting said digital chrominance components $(DS_1(n), DS_2(n))$ into an output digital composite chrominance signal $(DC'(n))$, said encoder means (40) including third switch means (37) for serially producing said digital chrominance components $(DS_1(n), DS_2(n))$ from said transmitting means (41, 42), said third switch means being switched in response to said second switching signal, second inverting means (49) for inverting an output of said third switch means (37) and fourths switch means (50) for switching between the outputs of said second inverting means (49) and said third switch means (37) in response to said first switching signal, with the relative switching phases of said first and fourths switch means being controlled for determining the phase of said output digital chrominance signal.

2. A phase control circuit according to claim 1, characterized in that said first switching signal as supplied to said decoder means (30) has an opposite phase to said first switching signal as supplied to said encoder means (40), whereby the phase of said output composite chrominance signal $(DC'(n))$ is different by 180° from that of said input composite chrominance signal $(DC(n))$.

3. A phase control circuit for an input digital composite chrominance signal $(DC(n); C)$ which is sampled with a sampling frequency of $2mf_{sc}$, wherein m is an integer and $f_{sc}$ is a color subcarrier frequency of the composite chrominance signal, characterized in decoder means (30) for converting said input digital composite chrominance signal $(DC(n); C)$ into digital chrominance components, said decoder means (30) including first inverting means (32) for inverting said input digital composite chrominance signal $(DC(n); C)$ and first switch means (33) for switching between said input digital composite chrominance signal $(DC(n), C)$ and an output $(\overline{DC(n)})$ of said inverting means (32) in response to a first switching signal having a frequency of $mf_{sc}$ to sequentially produce said digital chrominance components at the output thereof; means (—; 54) for transmitting the digital chrominance components from said decoder means (30) to an encoder means (40); the encoder means (40) converting said digital chrominance components into an output digital composite chrominance signal $(DC'(n); C')$, said encoder means (40) comprising second inverting means (49) for inverting said digital chrominance components from said transmitting means (—; 54) and second switch means (50) for switching the output of said second inverting means (49) and said digital chrominance components from said transmitting means (—; 54) in response to a second switching signal having said frequency $mf_{sc}$.

4. A phase control circuit according to claim 3, characterized in that said first switching signal which is supplied to said decoder means (30) has an opposite phase to said second switching signal which is supplied to said encoder means (40), whereby the phase of said output composite chrominance signal $(DC'(n); C')$ is different by 180° from that of said input composite chrominance signal $(DC(n); C)$.

## Patentansprüche

1. Phaseneinstellschaltung für ein digitales zusammengesetztes Eingangs-Chrominanzsignal (DC(n)), das mit einer Abtastfrequenz von $2mf_{sc}$ abgetastet ist, wobei m eine ganze Zahl ist und $f_{sc}$ eine Farbhilfsträgerfrequenz des zusammengesetzten Chrominanzsignals ist, gekennzeichnet durch ein Decodiermittel (30) zum Umsetzen des digitalen zusammengesetzten Eingangs-Chrominanzsignals (DS(n)) in digitale Chrominanzkomponenten ($DS_1(n)$, $DS_2(n)$), wobei das Decodiermittel (30) ein erstes invertierendes Mittel (32) zum Invertieren des digitalen zusammengesetzten Eingangs-Chrominanzsignals (DC(n)), ein erstes Schaltmittel (33) zum Umschalten zwischen dem digitalen zusammengesetzten Eingangs-Chrominanzsignal (DC(n) und einem Ausgangssignal $\overline{DC}(n)$ des invertierenden Mittels (32) in Reaktion auf ein erstes Schaltsignal, das eine Frequenz von $mf_{sc}$ hat, und ein zweites Schaltmittel (36) zum Aufteilen eines Ausgangssignals des ersten Schaltmittels (33) in die digitalen Chrominanzkomponenten ($DS_1(n)$, $DS_2(n)$) enthält, wobei das zweite Schaltmittel (36) eine Frequenz von $2mf_{sc}$ hat, und Mittel (41, 42) zum Übertragen der digitalen Chrominanzkomponenten ($DS_1(n)$, $DS_2(n)$) von dem Decodiermittel (30) zu einem Codiermittel (40), wobei das Codiermittel (40) die digitalen Chrominanzkomponenten ($DS_1(n)$, $DS_2(n)$) in ein digitales zusammengesetztes Ausgangs-Chrominanzsignal (DC'(n)) umsetzt und wobei das Codiermittel (40) ein drittes Schaltmittel (37) zum seriellen Ausgeben der digitalen Chrominanzkomponente ($DS_1(n)$, $DS_2(n)$) von den Mitteln (41, 42) zum Übertragen, wobei das dritte Schaltmittel in Reaktion auf das zweite Schaltsignal geschaltet wird, ein zweites invertierendes Mittel (49) zum Invertieren eines Ausgangssignals des dritten Schaltmittels (37) und ein viertes Schaltmittel (50) zum Umschalten zwischen den Ausgangssignalen des zweiten invertierenden Mittels (49) und des dritten Schaltmittels (37) in Reaktion auf das erste Schaltsignal enthält, wobei die relativen Schaltphasen des ersten und des vierten Schaltmittels zum Bestimmen der Phase des digitalen Ausgangs-Chrominanzsignals gesteuert werden.

2. Phaseneinstellschaltung nach Anspruch 1, dadurch gekennzeichnet, daß das erste Schaltsignal, wenn es dem Decodiermittel (30) zugeführt wird, eine entgegengesetzte Phase zu derjenigen des ersten Schaltsignals hat, wenn es dem Codiermittel (40) zugeführt wird, wodurch die Phase des zusammengesetzten Ausgangs-Chrominanzsignals (DC'(n)) um 180° verschieden von derjenigen des zusammengesetzten Eingangs-Chrominanzsignals (DC(n)) ist.

3. Phaseneinstellschaltung für ein digitales zusammengesetztes Eingangs-Chrominanzsignal (DC(n); C), das mit einer Abtastfrequenz von $2mf_{sc}$) abgetastet ist, wobei m eine ganze Zahl ist und $f_{sc}$ eine Farbhilfsträgerfrequenz des zusammengesetzten Chrominanzsignals ist, gekennzeichnet durch ein Decodiermittel (30) zum Umsetzen des digitalen zusammengesetzten Eingangs-Chrominanzsignals (DC(n); C) in digitale Chrominanzkomponenten, wobei das Decodiermittel (30) ein erstes invertierendes Mittel (32) zum Invertieren des digitalen zusammengesetzten Eingangs-Chrominanzsignals (DC(n); C) und ein erstes Schaltmittel (33) zum Umschalten zwischen dem digitalen zusammengesetzten Eingangs-Chrominanzsignal (DC(n); C) und einem Ausgangssignal $\overline{DC}(n)$ des invertierenden Mittels (32) in Reaktion auf ein erstes Schaltsignal, das eine Frequenz von $mf_{sc}$ hat, um sequentiell die digitalen Chrominanzkomponenten an dem Ausgang desselben zu erzeugen, enthält, und Mittel (−; 54) zum Übertragen der digitalen Chrominanzkomponenten von dem Decodiermittel (30) zu einem Codiermittel (40), wobei das Codiermittel (40) die digitalen Chrominanzkomponenten in ein digitales zusammengesetztes Ausgangs-Chrominanzsignal (DC'(n); C') umsetzt und wobei das Codiermittel (40) ein zweites invertierendes Mittel (49) zum Invertieren der digitalen Chrominanzkomponente von den Mitteln (−; 54) zum Übertragen und ein zweites Schaltmittel (50) zum Schalten des Ausgangssignals des zweiten invertierenden Mittels (49) und der digitalen Chrominanzkomponenten von den Mitteln (−; 54) zum Übertragen in Reaktion auf ein zweites Schaltsignal, das die Frequenz $mf_{sc}$ hat, umfaßt.

4. Phaseneinstellschaltung nach Anspruch 3, dadurch gekennzeichnet, daß das erste Schaltsignal, welches dem Decodiermittel (30) zugeführt wird, eine entgegengesetzte Phase zu derjenigen des zweiten Schaltsignals hat, welches dem Codiermittel (40) zugeführt wird, wodurch die Phase des zusammengesetzten Ausgangs-Chrominanzsignals (DC'(n); C') um 180° unterschiedlich von derjenigen des zusammengesetzten Eingangs-Chrominanzsignals (DC(n); C) ist.

## Revendications

1. Circuit de commande de la phase d'un signal d'entrée numérique de chrominance composite (DC(n)) qui est échantillonné à une fréquence d'échantillonnage de $2\,mf_{sc}$, dans laquelle m est un entier et $f_{sc}$ est la fréquence d'une sous porteuse de couleur du signal de chrominance composite, caractérisé en ce qu'il comporte des moyens décodeurs (30) pour convertir ledit signal d'entrée numérique de chrominance composite (DC(n)) en composantes numériques de chrominance ($DS_1(n)$, $DS_2(n)$), lesdits moyens décodeurs (30) comprenant des premiers moyens inverseurs (32) pour inverser ledit signal d'entrée numérique de chrominance composite (DC(n)), des premiers moyens de commutation (33) pour commuter entre ledit signal d'entrée numérique de chrominance composite (DC(n)) et la sortie (DC(n)) desdits moyens inverseurs (32) en réponse à un premier signal de commutation à une fréquence $mf_{sc}$, des seconds moyens de commutations (36) pour répartir une sortie desdits premiers moyens de commutation (33) en composantes numériques de chrominance ($DC_1(n)$, $DS_2(n)$), lesdits seconds moyens de commutation (36)

8

étant commutés en réponse à un second signal de commutation à une fréquence de $mf_{sc}$, des moyens (41, 42) pour transmettre les composantes numériques de chrominance ($DS_1(n)$, $DS_2(n)$) depuis lesdits moyens décodeurs (30) vers des moyens encodeurs (40); lesdits moyens encodeurs (40) convertissant lesdites composantes numériques de chrominance ($DS_1(n)$, $DS_2(n)$) en un signal de sortie numérique de chrominance composite (DC'(n)), lesdits moyens encodeurs (40) comprenant des troisièmes moyens de commutation (37) pour produire séquentiellement lesdites composantes numériques de chrominance ($DS_1(n)$, $DS_2(n)$) depuis lesdits moyens de transmission (41, 42), lesdits troisièmes moyens de commutation étant commutés en réponse audit second signal de commutation, les seconds moyens inverseurs (49) pour inverser la sortie d'un troisième moyen de commutation (37) et des quatrièmes moyens de commutation (50) pour commuter entre les sorties des seconds moyens d'inversion (49) et lesdits troisièmes moyens de commutation (37) en réponse audit quatrième signal de commutation, les phases des commutations relatives desdits premiers et quatrièmes moyens de commutation étant commandées de façon à déterminer la phase dudit signal de sortie numérique de chrominance.

2. Circuit de commande de la phase selon la revendication 1, caractérisé en ce que ledit premier signal de commutation tel qu'il est fourni aux dits moyens décodeurs (30), présente une phase opposée à celle dudit second signal de commutation tel qu'il est fourni aux dits moyens encodeurs (40) de façon à ce que la phase dudit signal de sortie de chrominance composite (DC'(n)) soit différent de 180 degrés par rapport à celle dudit signal d'entrée de chrominance composite (DC(n)).

3. Circuit de commande de la phase pour un signal d'entrée numérique de chrominance composite (DC(n); C) qui est échantillonné à une fréquence d'échantillonnage de 2 $mf_{sc}$, dans lequel m est un entier et $f_{sc}$ est une fréquence de sous porteuse couleur du signal de chrominance composite, caractérisé en ce qu'il comporte des moyens décodeurs (30) pour convertir ledit signal d'entrée numérique de chrominance composite (DC(n); C) en composantes numériques de chrominance, lesdits moyens décodeurs (30) comprenant des premiers moyens inverseurs (32) pour inverser ledit signal d'entrée numérique de chrominance composite (DC(n); C), et des premiers moyens de commutation (33) pour commuter entre ledit signal d'entrée numérique de chrominance composite et une sortie (DC(n)) desdits moyens inverseurs (32) en réponse à un premier signal de commutation ayant une fréquence $mf_{sc}$ pour produire séquentiellement lesdites composantes numériques de chrominance sur sa sortie; des moyens (54) pour transmettre les composantes numériques de chrominance depuis lesdits moyens décodeurs (30) à des moyens encodeurs (40), les moyens encodeurs (40) étant disposés de façon à convertir lesdites composantes numériques de chrominance en un signal de sortie numérique de chrominance composite (DC'(n); C') lesdits moyens encodeurs (40) comprenant des seconds moyens inverseurs (49) pour inverser lesdites composantes numériques de chrominance depuis lesdits moyens de transmission (54), et lesdits moyens de commutation (50) pour commuter la sortie desdits seconds moyens d'inversion (49) et lesdites composantes numériques de chrominance depuis lesdits moyens de transmission (54) en réponse à un second signal de commutation ayant ladite fréquence $mf_{sc}$.

4. Circuit de commande de la phase selon la revendication 3 caractérisé en ce que ledit premier signal de commutation qui est fourni aux dits moyens décodeurs (30) présente une phase opposée à celle dudit second signal de commutation qui est fourni aux dits moyens encodeurs (40), de façon à ce que la phase dudit signal de sortie de chrominance composite (DC'(n); C') diffère de 180 degrés par rapport à celle dudit signal d'entrée de chrominance composite (DC(n); C).

FIG. 1

FIG. 2

FIG. 3

## FIG. 4

## FIG. 5

FIG. 6

FIG. 7

FIG. 8

FIG. 9

FIG. 10